# EUROPÄISCHE PATENTSCHRIFT

(11) **EP 2 384 937 B1**
(45) Veröffentlichungstag und Bekanntmachung des Hinweises auf die Patenterteilung: **30.04.2014**
(21) Anmeldenummer: 11175420.6
(22) Anmeldetag: 05.09.2008
(51) Int. Cl.: B60R 5/04

(54) **Vorrichtung zum Verstauen von Gegenständen in einem Kraftfahrzeug**
Device for stowing objects in a motor vehicle
Dispositif de rangement d'objets dans un véhicule automobile

(30) Priorität: 13.09.2007 DE 102007045037
(43) Veröffentlichungstag der Anmeldung: 09.11.2011
(62) Teilanmeldung aus: 08015673.0
(73) Patentinhaber: BOS GmbH & Co. KG, 73760 Ostfildern (DE)
(72) Erfinder: Bohlke, Hartmut, 42369 Wuppertal (DE); Göbbels, Andreas, 51515 Kürnten (DE); Salewski, Jürgen, 40599 Düsseldorf (DE); Sitzler, Wolfgang, 42111 Wuppertal (DE); Büschgens, Olaf, 47877 Willich (DE)
(74) Vertreter: Patentanwälte Ruff, Wilhelm, Beier, Dauster & Partner

(56) Entgegenhaltungen:
- EP-A- 1 717 104
- DE-A1-102005 051 732
- FR-A- 2 876 641
- JP-A- 60 222 339

## Beschreibung

Die Erfindung betrifft eine Vorrichtung zum Verstauen von Gegenständen in einem Laderaum, insbesondere in einem Hecklade- oder Kofferraum eines Kraftfahrzeugs.

Staubehälter oder -behältnisse, in welchen kleinere oder empfindliche Gegenstände in einem Laderaum eines Kraftfahrzeugs übersichtlich und sicher lagerbar sind, sind allgemein bekannt. Insbesondere in größeren Limousinen und ähnlichen Fahrzeugklassen hat ein (Heck-)Laderaum eine große Ausdehnung, besonders auch eine große Tiefe, welche nicht für alle Gegenstände gleichermaßen geeignet ist. Im Laderaum angeordnete Staubehältnisse zum Verstauen kleinerer und/oder empfindlicher Gegenstände können hier den Nutzwert des Laderaums deutlich erhöhen.

Derartige Staubehältnisse sind beispielsweise auf der Unterseite einer Hutablage in einer Verstauposition verschiebbar befestigt und zum Be- oder Entladen in eine Be- oder Entladeposition ausziehbar. Die Staubehältnisse werden im Regelfall nur zeitweise oder vorübergehend genutzt.

Aus der unveröffentlichten DE 10 2006 013974.7 ist ein Staubehältnis für den Einsatz in einem Laderaum eines Kraftfahrzeugs bekannt, das auf der Unterseite einer Hutablage befestigbar und zum Beladen oder Entladen in eine Be- und/oder Entladeposition bewegbar ist, wobei das Staubehältnis einen Rahmen, eine Auflagefläche und mindestens eine, die Auflagefläche mit dem Rahmen verbindende, im Wesentlichen unelastische Seitenwand umfasst, und wobei die Seitenwand verformbar ist, so dass die Höhe des Staubehältnisses variabel ist. Die Seitenwand wird dabei in einer Ausgestaltung durch mehrere Rollobahnen gebildet, welche jeweils auf einer Wickelwelle auf- und abwickelbar befestigt sind.

Aus FR-A-2 876 641 ist auch ein Staubehältnis für eines Kraftfahrzeug bekannt.

Es ist eine Aufgabe der Erfindung, eine Sicherheit eines entsprechenden Staubehältnisses zu erhöhen.

Diese Aufgabe wird gelöst durch eine Vorrichtung zum Verstauen von Gegenständen in einem Laderaum eines Kraftfahrzeugs mit einem Staubehältnis, das in dem Laderaum des Kraftfahrzeugs anbringbar ist, wobei das Staubehältnis eine Auflagefläche und eine zumindest teilweise elastisch und/oder unelastisch verformbare Wandung aufweist, zur Veränderung des Staufachvolumens eine Höhe der Wandung mindestens abschnittsweise durch eine Verstelleinrichtung umfassend mindestens eine Wickelwelle veränderbar ist, die Verstelleinrichtung mindestens eine lösbare Fixiereinrichtung aufweist und eine Drehbewegung der mindestens einen Wickelwelle durch die lösbare Fixiereinrichtung für einen Transport sperrbar ist, so dass bei einem Transport zumindest eine Auslängung der Wandung verhindert ist.

Die Höhe der Wandung ist beispielsweise abhängig von einer Gewichtskraft eines durch das Staubehältnis aufgenommenen Gegenstands. Während der Fahrt, insbesondere bei Erschütterungen oder Vibrationen des Kraftfahrzeugs aufgrund von Unebenheiten einer Fahrbahn, Bodenwellen oder bei extremen Brems- und/oder Beschleunigungseingriffen, können auf das Staubehältnis Kräfte einwirken, welche zu einer Auslängung der Wandung führen. Durch eine Fixiereinrichtung wird erfindungsgemäß eine Drehbewegung der Wickelwelle, und damit eine ungewünschte Auslängung sicher verhindert.

In einer vorteilhaften Ausgestaltung der Erfindung umfasst die Fixiereinrichtung mindestens ein Dämpfungselement für eine Lastspitzenabfederung. Durch das Dämpfungselement werden einwirkende Kräfte aufgrund von starken Erschütterungen beispielsweise als Folge von Bodenwellen abgefangen, und so verhindert, dass einwirkende Kräfte zu einer Beschädigung der Bauteile führen.

In einer weiteren Ausgestaltung der Erfindung umfasst die Fixiereinrichtung mindestens ein Sperr-Kegelrad, welches zum Sperren der Drehbewegung der Wickelwelle in ein an der Wickelwelle drehfest angeordnetes, komplementäres Kegelrad greift. Durch Andrücken des an der Wickelwelle vorgesehenen Kegelrads an das Sperr-Kegelrad wird die Drehbewegung der Wickelwelle gesperrt. Treffen beim Aneinanderdrücken zwei Zähne der Kegelräder aufeinander, so wird in einer Ausführungsform die Wickelwelle beim Andrücken leicht verdreht, so dass die Zähne des Kegelrads der Wickelwelle in entsprechenden Zahnzwischenräumen des fahrzeugseitigen Kegelrads zu liegen kommen und umgekehrt. Die Achsen der Kegelräder sind dabei in einer vorteilhaften Ausgestaltung im Wesentlichen senkrecht zueinander angeordnet.

In einer Weiterbildung der Erfindung ist das Sperr-Kegelrad drehfest und axial verschiebbar an einer zweiten Wickelwelle gegenüberliegend einem mit der zweiten Wickelwelle drehfest verbundenen Kegelrad angeordnet. Durch Verschieben des Sperr-Kegelrads in Richtung des Kegelrads der zweiten Wickelwelle wird das Kegelrad der ersten Wickelwelle zwischen dem Sperr-Kegelrad und dem Kegelrad der zweiten Wickelwelle verklemmt, so dass ein Verdrehen der ersten Wickelwelle und der zweiten Wickelwelle verhindert wird. Die Kegelräder der ersten und der zweiten Wickelwelle sind dabei in einer Ausgestaltung derart angeordnet, dass eine Bewegung der Wickelwelle synchronisiert ist. Eine Verschiebung des Sperr-Kegelrads zum Verklemmen des Kegelrads der ersten Wickelwelle erfolgt in einer Ausführungsform entgegen der Kraft eines Kraftelements, insbesondere entgegen der Kraft einer Feder. Durch das Kraftelement wird dabei in einem unbelasteten Zustand ein ungewünschte Fixieren der Drehbewegung verhindert. Das Federelement ist dabei vorzugsweise koaxial zu der Verschieberichtung des Sperr-Kegelrads angeordnet.

In einer Weiterbildung ist das Dämpfungselement ein Dämpfer, insbesondere ein Gummidämpfer, welcher zwischen dem Sperr-Kegelrad und dem Kegelrad der zweiten Wickelwelle angeordnet ist. Durch ein entsprechendes Dämpfungselement wird verhindert, dass Lastspitzen, welche beispielsweise aufgrund von Erschütterungen durch Bodenwellen oder dergleichen, an dem Staubehältnis angreifen, durch die Zähne der Kegelräder aufgefangen werden.

In einer anderen Ausgestaltung der Erfindung umfasst die Fixiereinrichtung einen fahrzeugseitig, im Wesentlichen drehfest gelagerten Dorn, welcher zum Sperren der Drehbewegung der Wickelwelle in einen drehfest an der Wickelwelle angeordneten Lochkranz einführbar ist. Der Lochkranz ist in einer Ausgestaltung derart angeordnet, dass die Löcher in Umfangsrichtung verteilt sind. Ein Raster des Lochkranzes ist dabei vorzugsweise regelmäßig. In einer vorteilhaften Ausgestaltung ist der Dorn fahrzeugfest entgegen der Kraft eines Rückstellelements axial verschiebbar gelagert. Trifft der Dorn bei einer entsprechenden Ausgestaltung beim Einführen nicht direkt auf ein Loch des Lochkranzes, so wird der Dorn durch den Lochkranz verschoben oder eingedrückt. Verdreht sich die Wickelwelle aufgrund einer Erschütterung oder dergleichen, so rastet der Dorn in das benachbarte oder nachfolgende Loch aufgrund der Kraft des Rückstellelements ein.

In noch einer anderen Ausgestaltung der Erfindung umfasst die Fixiereinrichtung einen fahrzeugseitig, im Wesentlichen drehfest gelagerten Dorn mit einer zumindest teilweise nicht-rotationssymmetrischen Außenkontur, welcher zum Sperren der Drehbewegung der Wickelwelle in eine komplementäre, sich in Achsrichtung erstreckende Aussparung an der Wickelwelle einführbar ist. Durch den Dorn ist eine Drehbewegung einer koaxial angeordneten Wickelwelle auf einfache Weise sperrbar.

In einer Weiterbildung der Erfindung ist das Dämpfungselement der Fixiereinrichtung ein Teil der fahrzeugseitigen Lagerung des Dorns. Die aufgrund von Erschütterungen auftretenden Lastspitzen können dadurch im Wesentlichen vor einer Einwirkung auf das Staubehältnis abgefangen werden.

In einer Ausgestaltung der Erfindung ist das Staubehältnis in dem Fahrzeug entlang einer im Wesentlichen zum Fahrzeugboden parallelen Ebene, insbesondere in Fahrzeuglängsrichtung verschiebbar lagerbar, wobei durch Verschieben in eine Stauposition die Wickelwelle durch die Fixiereinrichtung gesperrt wird. Durch Verschieben wird dabei in einer Ausgestaltung der Erfindung der Dorn in den Lochkranz bzw. in die Aussparung an der Wickelwelle eingeführt. In einer anderen Ausgestaltung wird durch Einschieben des Staubehältnisses in die Stauposition das Sperr-Kegelrad gegen das Kegelrad der ersten Wickelwelle zum Verhindern der Drehbewegung gedrückt. In beiden Ausgestaltungen ist eine einfache Fixierung beim Einschieben ohne weitere Handgriffe des Nutzers möglich. Für eine verschiebbare Lagerung weist das Staubehältnis in einer Ausgestaltung eine Schienenführung, insbesondere eine Teleskopschienenführung oder eine Käfigschienenführung auf.

Die Aufgabe wird weiter gelöst durch eine Auszugsbegrenzungseinrichtung, durch welche eine maximale Auszugsbewegung der Wickelwelle begrenzt ist. Insbesondere beim Einstellen schwerer Gegenstände in das Staubehältnis kann ein Staufachvolumen aufgrund der einwirkenden Gewichtskraft stark vergrößert werden. Um zu verhindern, dass die daraus resultierenden, einwirkenden Kräfte an einer Anbindung der Wandung an die Wickelwelle abgefangen werden, ist erfindungsgemäß eine Auszugsbegrenzungseinrichtung vorgesehen.

In einer Ausgestaltung der Erfindung umfasst die Auszugsbegrenzungseinrichtung mindestens zwei über ein längliches Element, wie ein Seil, ein Band oder dergleichen, insbesondere ein Flachband, miteinander verbundene, kämmende Zahnräder, wobei die maximale Auszugsbewegung durch die Länge des länglichen Elements bestimmt ist. Das Band ist in einer Ausgestaltung zumindest teilweise nachgiebig, so dass durch das Band eine Dämpfung der Bewegung an den Bewegungsendpunkten erreicht wird.

In einer anderen Ausgestaltung der Erfindung umfasst die Auszugsbegrenzungseinrichtung ein Getriebe mit mindestens zwei, insbesondere drei kämmenden Zahnrädern, wobei ein Drehwinkel zumindest eines Zahnrads durch einen Anschlag begrenzt ist. Durch die Bewegungsbegrenzung des einen Zahnrads des Getriebes ist auch eine Bewegung der verbleibenden Zahnräder des Getriebes gesperrt. Durch geeignete Übersetzungsverhältnisse zwischen den Zahnrädern ist es dabei möglich, dass ein direkt mit der Wickelwelle drehfest verbundenes Zahnrad des Getriebes mehrere Umdrehungen durchführt, während ein mit dem Anschlag direkt zusammenwirkendes Zahnrad weniger als eine volle Umdrehung, beispielsweise nur eine 3/4 Umdrehung oder weniger durchführt. Durch die Zähne des Getriebes kann dabei eine gewisse Dämpfung einwirkender Kräfte erzielt werden. In einer anderen Ausgestaltung ist der Anschlag mit einem Dämpfungselement gestaltet.

In noch einer anderen Ausgestaltung der Erfindung umfasst die Auszugsbegrenzungseinrichtung ein Malteserkreuzgetriebe mit einem Zapfen. Durch den Zapfen kann dabei eine Drehbewegung der Wickelwelle in Auszugs- und/oder Aufwickelrichtung verhindert werden. Je nach Gestaltung des Zapfens und/oder eines zugehörigen Anschlags ist eine Dämpfung beim Aufeinandertreffen der Komponenten realisierbar.

In Weiterführung der Erfindung weist die mindestens eine Wickelwelle eine Wickelfeder auf, wobei eine Auslängung der Wandung entgegen der Kraft der Wickelfeder erfolgt. Die Wickelfeder, beispielsweise eine übliche Federspeicheranordnung, ermöglicht ein einfaches Verkleinern des Staubehältnisses beim Nichtgebrauch. Dabei sind keine weiteren Befestigungsmittel zum Verzurren des Staubehältnisses erforderlich. In einzelnen Anwendungen können jedoch zusätzliche Befestigungsmittel sinnvoll sein.

In einer Ausgestaltung der Erfindung ist eine Bremseinrichtung vorgesehen, welche entgegen einer Kraft der Wickelfeder wirkt, um eine Drehbewegung der Wickelwelle abzubremsen, insbesondere zu reduzieren oder zu verhindern. Dies kann für beide Richtungen der Wickelwelle oder lediglich für eine Richtung gelten. Somit kann ein Auslängen oder ein Zurückziehen in die Ruheposition abgebremst werden, auch bis auf Null. Eine Drehbewegung der Wickelwelle zur Vergrößerung des Staufachvolumens durch Auslängung der Wandung wird beispielsweise durch die Gewichtskraft eines eingelegten Gegenstands bewirkt. Daneben kann die Kraft jedoch auch durch einen Nutzer manuell und/oder durch eine Stelleinrichtung wie einen Elektromotor aufgebracht werden. Um unabhängig von der Gewichtskraft des Gegenstands das Staufachvolumen zu fixieren, ist die erfindungsgemäße Bremseinrichtung vorgesehen. In vorteilhaften Ausgestaltungen sind die Fixiereinrichtung zum Fixieren eines Staufachvolumens beim Transport und die Bremseinrichtung zum Festlegen eines Staufachvolumens getrennt ausgebildet. Die Einrichtungen können jedoch gemeinsame Bauteile aufweisen. In anderen Ausgestaltungen sind die Einrichtungen gemeinsam ausgebildet. Ein Lösen der Bremseinrichtung kann in einer Ausgestaltung durch einen Stellmotor oder dergleichen erfolgen. Als Bremseinrichtung kann eine Silikonbremse vorgesehen sein.

In einer Ausgestaltung der Erfindung umfasst die Bremseinrichtung eine Schlingenbremse und/oder einen Ratschentrieb. Als Schlingenbremse wird dabei eine unter Ausnutzung der Reibkraft funktionierende Bremse bezeichnet, bei welcher eine Walze oder Spule von einem Band oder dergleichen umschlungen wird. Entsprechende Bremseinrichtungen sind einfach herstellbar und erlauben ein sicheres Festlegen des Staufachvolumens.

In einer weiteren Ausgestaltung der Erfindung umfasst die Wandung mindestens ein verformbares Flächengebilde, welches auf der Wickelwelle auf- und abwickelbar angeordnet ist. Die Wandung kann beispielsweise zwei gegenüberliegende Seitenwände umfassen, wobei die eine Seitenwand starr ist und die zweite Seitenwand als flexibles Flächengebilde gestaltet ist, welches auf der Wickelwelle auf- bzw. von dieser abwickelbar ist. Durch ein Auf- oder Abwickeln kann dabei eine Schrägstellung der Auflagefläche bei gleichzeitigem Verändern des Staufachvolumens erfolgen. In einer anderen Ausgestaltung sind die beiden Seitenwände als gemeinsames Flächengebilde gestaltet, wobei die Auflagefläche schwimmend auf dem Flächengebilde lagerbar ist. In vorteilhaften Ausgestaltungen umfasst die Wandung zwei, drei oder vier Seitenwände, welche eine rechteckförmige Grundfläche umgeben. Die Seitenwände sind dabei jeweils an einer Wickelwelle angebracht.

In Weiterbildung der Erfindung ist das Flächengebilde mit der Wickelwelle über einen Keder verbunden. Die Anbindung mit dem Keder ermöglicht eine sichere Befestigung des flexiblen Flächengebildes an der Wickelwelle, wobei in einer Ausgestaltung das flexible Flächengebilde selbst als Auszugsbegrenzungsmittel fungiert. Alternativ kann das Flächengebilde auch stoffschlüssig, insbesondere durch Verkleben, mit der Wickelwelle verbunden sein.

In einer Ausgestaltung der Erfindung umfasst die Vorrichtung mindestens zwei, winklig, insbesondere rechtwinklig zueinander angeordnete, synchronisierte Wickelwellen, wobei auf jeder Wickelwelle ein verformbares Flächengebilde auf- und abwickelbar angeordnet ist. Die Wickelwellen sind dabei beispielsweise durch komplementäre Kegelräder synchronisiert. Dabei ist es beispielsweise denkbar, dass eine Wickelwelle durch einen Stellmotor, insbesondere durch einen Elektromotor angetrieben wird. Die Bewegung wird durch die Synchronisationsmittel, insbesondere die Kegelräder, auf die weiteren Wickelwellen übertragen.

In einer weiteren Ausgestaltung der Erfindung sind aneinander angrenzende Flächengebilde über ein wiederverschließbares und wiederöffenbares Schließelement, insbesondere einen Reißverschluss miteinander verbindbar, wobei das Schließelement beim Abwickeln der Flächengebilde geschlossen wird.

In einer Weiterbildung der Erfindung ist ein Stopper zur Begrenzung der Öffnungsbewegung des Schließelements, insbesondere des Reißverschluss vorgesehen.

In einer anderen Weiterbildung der Erfindung ist eine Halterung für einen Reißverschlusszipper aus einem flexiblen Material, insbesondere aus einem Kunststoff oder einem Drahtbügel hergestellt. Dadurch ist eine Veränderung des Durchmessers der Wickelwelle mit daran aufgewickeltem bzw. abgewickeltem Flächengebilde ausgleichbar.

In einer weiteren Ausgestaltung der Erfindung ist die Wandung zumindest teilweise faltbar gestaltet, wobei eine Mechanik zum Falten der Wandung mindestens ein auf der Wickelwelle gelagertes, strangartiges Element, wie ein Band, ein Seil oder dergleichen, umfasst. In anderen Worten ist die Wandung als Faltenbalg gestaltet. Eine Höhe der Wandung ist dabei durch die freie Länge des strangartigen Elements bestimmt. Durch Aufwickeln des strangartigen Elements wird dabei ein Zusammenfalten bewirkt.

In einer weiteren Ausgestaltung der Erfindung umfasst die Wandung zumindest zwei ineinander stapelbare Hartschalen, wobei eine Mechanik zum Ineinanderstapeln der Hartschalen mindestens ein auf der Wickelwelle gelagertes, strangartiges Element, wie ein Band, ein Seil oder dergleichen, umfasst. In anderen Worten ist die Wandung zumindest abschnittsweise teleskopierbar gestaltet. Eine Höhe der Wandung ist dabei durch die freie Länge des strangartigen Elements bestimmt.

In einer weiteren Ausgestaltung der Erfindung ist ein Rahmen des Staubehältnis zumindest teilweise durch die mindestens eine Wickelwelle gebildet.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich konstru k-tive Einzelheiten, räumliche Anordnungen und Verfahrensschritte, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1a:: eine perspektivische Darstellung eines Fahrzeughecks mit einer erfindungsgemäße Vorrichtung zum Verstauen von Gegenständen mit einem Staubehältnis;
- Fig. 1b:: eine perspektivische Darstellung des Fahrzeughecks gemäß Fig. 1a, wobei der Staubehältnis zugänglich ist;
- Fig. 1c:: eine perspektivische Darstellung des Fahrzeughecks gemäß Fig. 1a, wobei eine Laderaumabdeckung hochgeklappt und der Staubehältnis nicht in Benutzung ist;
- Fig. 1d:: eine perspektivische Darstellung des Fahrzeughecks gemäß Fig. 1a, wobei eine Laderaumabdeckung hochgeklappt und der Staubehältnis in Benutzung ist;
- Fig. 1e:: eine perspektivische Darstellung des Fahrzeughecks gemäß Fig. 1a, wobei eine Laderaumabdeckung hochgeklappt und die Vorrichtung zugänglich ist;
- Fig. 2a:: eine perspektivische Darstellung eines zweiten Fahrzeughecks mit einer erfindungsgemäße Vorrichtung zum Verstauen von Gegenständen mit einem Staubehältnis;
- Fig. 2b:: eine perspektivische Darstellung des Fahrzeughecks gemäß Fig. 3a, wobei der Staubehältnis zugänglich ist;
- Fig. 3a:: eine perspektivische Darstellung der erfindungsgemäßen Vorrichtung;
- Fig. 3b:: eine perspektivische Darstellung der Vorrichtung gemäß Fig. 3a, wobei eine Verstelleinrichtung sichtbar ist;
- Fig. 4:: eine Einzugssperre der Verstelleinrichtung;
- Fig. 5:: ein Detail V gemäß Fig. 3b bei einer Vorrichtung gemäß einer ersten Ausführungsform der Erfindung;
- Fig. 6:: das Detail V gemäß Fig. 3b bei einer Vorrichtung gemäß einer zweiten Ausführungsform der Erfindung;
- Fig. 7:: eine Schnittansicht durch eine Ebene VII gemäß Fig. 6;
- Fig. 8:: das Detail V gemäß Fig. 3b bei einer Vorrichtung gemäß einer dritten Ausführungsform der Erfindung;
- Fig. 9:: das Detail V gemäß Fig. 3b bei einer Vorrichtung gemäß einer vierten Ausführungsform der Erfindung;
- Fig. 10:: das Detail V gemäß Fig. 3b bei einer Vorrichtung gemäß einer fünften Ausführungsform der Erfindung;
- Fig. 11:: das Detail V gemäß Fig. 3b bei einer Vorrichtung gemäß einer sechsten Ausführungsform der Erfindung;
- Fig. 12:: eine Anbindung eines flexiblen Flächengebildes an eine Wickelwelle einer erfindungsgemäßen Vorrichtung gemäß einem weiteren Ausführungsbeispiel der Erfindung
- Fig. 13:: ein Detail XIII der Vorrichtung gemäß Fig. 3b;
- Fig. 14:: ein Detail XIV der Vorrichtung gemäß Fig. 3b;
- Fig. 15a bis 15d:: Zuschnitte für eine Wandung eines Behältnis einer erfindungsgemäßen Vorrichtung;
- Fig. 16:: eine Teilansicht einer erfindungsgemäßen Vorrichtung gemäß einem weiteren Ausführungsbeispiel mit einem Faltenbalg und
- Fig. 17:: eine Teilansicht einer erfindungsgemäßen Vorrichtung gemäß einem weiteren Ausführungsbeispiel mit einer teleskopierbaren Wandung.

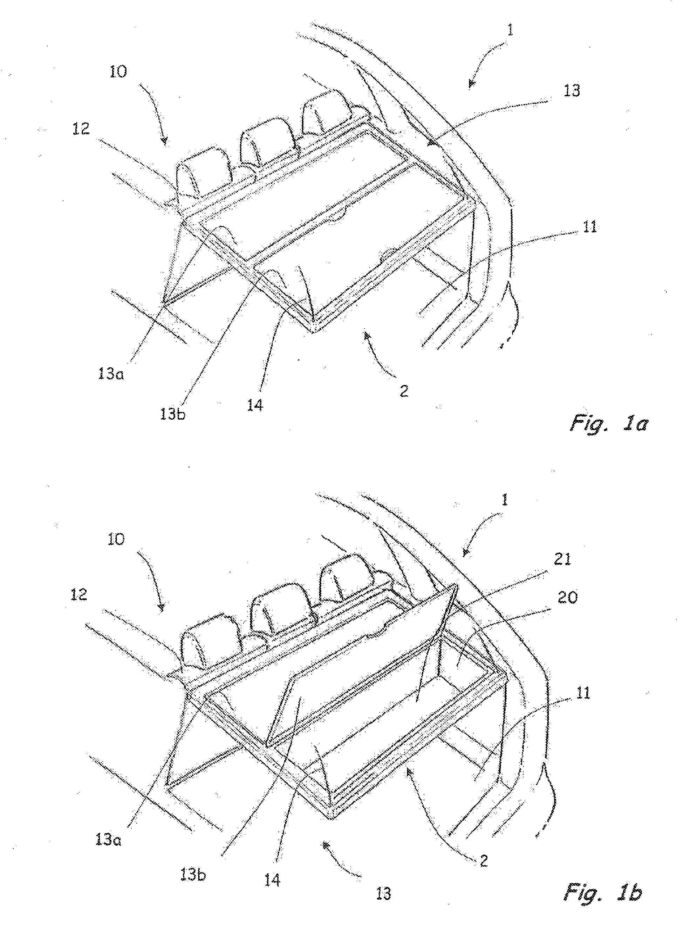

Die Figuren 1a bis 1e zeigen perspektivisch eine Heckansicht eines schematisch dargestellten Fahrzeugs 1, welches ein Schrägheck oder Fliesheck aufweist. Ein schematisch angedeuteter Fahrgastraum 10 des Kraftfahrzeugs 1 ist dabei von einem Koffer- oder Heckladeraum 11 durch eine Rücksitzbank 12 getrennt. Zur Abdeckung des Heckladeraums 11 ist eine Laderaumabdeckung 13 vorgesehen, welche in dem dargestellten Ausführungsbeispiel über Bänder 14 mit einer nicht dargestellten Laderaum- oder Heckklappe verbunden ist. Die Laderaumabdeckung 13 ist beispielsweise als Hartschalen-Laderaumabdeckung gestaltet, wobei die Laderaumabdeckung 13 sowohl als Sichtschutz für die in dem Laderaum 11 befindliche Gegenstände, als auch als Ablage dienen kann. In dem dargestellten Ausführungsbeispiel ist die Laderaumabdeckung 13 zweigeteilt, umfassend die Teile 13a, 13b. Durch die Figuren 1a bis 1e werden verschiedene Funktionen der erfindungsgemäßen Vorrichtung verdeutlicht.

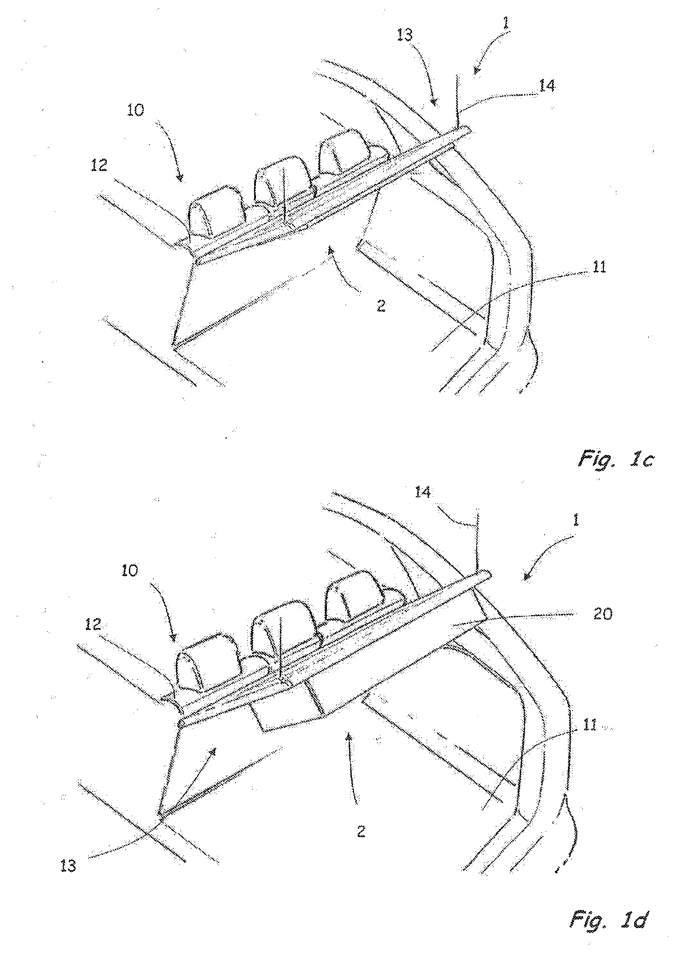

Wie am besten in den Figuren 1b und 1d erkennbar, ist unterhalb des in Fahrzeugrichtung betrachtet hinteren Teils 13d der Laderaumabdeckung 13 ein Behältnis 2 angebracht. Das Behältnis 2 hat eine im Wesentlichen umlaufende Wandung 20 und eine Auflagefläche 21, wobei die Wandung 20 des Behältnisses 2 verformbar ist, so dass ein Volumen des Behältnisses 2 variabel ist. Dadurch ist es ― wie in Fig. 1c erkennbar - möglich, ein Volumen des Behältnisses 2 bei Nichtgebrauch derart zu verringern, dass das Behältnis 2 nur unwesentlich in den Laderaum 11 hineinragt. Zum Ablegen von Gegenständen, wie beispielsweise kleinen Elektrogeräten, Aktenmappen, Flaschen oder dergleichen, kann die Wandung 20 ausgelängt werden, so dass ein benötigtes Volumen geschaffen wird. Das Behältnis 2 wird daher auch als selbstraumschaffendes Staufach bezeichnet.

Wie in den Figuren 1c und 1d erkennbar, ist in der dargestellten Ausführungsform die Laderaumabdeckung 13 um eine in Höhe der Rücksitzbank 12 angeordnete, in Fahrzeugquerrichtung verlaufende Achse verschwenkbar. Dabei wird in der in den Fig. 1c und 1d dargestellten Anordnung das Behältnis 2 unabhängig von seinem Volumen mit der Laderaumabdeckung 13 verschwenkt. Gegenstände, welche in dem Behältnis 2 angeordnet sind, werden je nach Größe auch beim Verschwenken sicher gelagert. Wie der Vergleich von Figur 1c und Figur 1d zeigt, ist das Volumen des Behältnisses 2 durch eine Verformung der Wandung 20 im Nichtgebrauch auf ein Minimum reduzierbar, so dass das Behältnis 2 nur unwesentlich in den Laderaum 11 hineinragt.

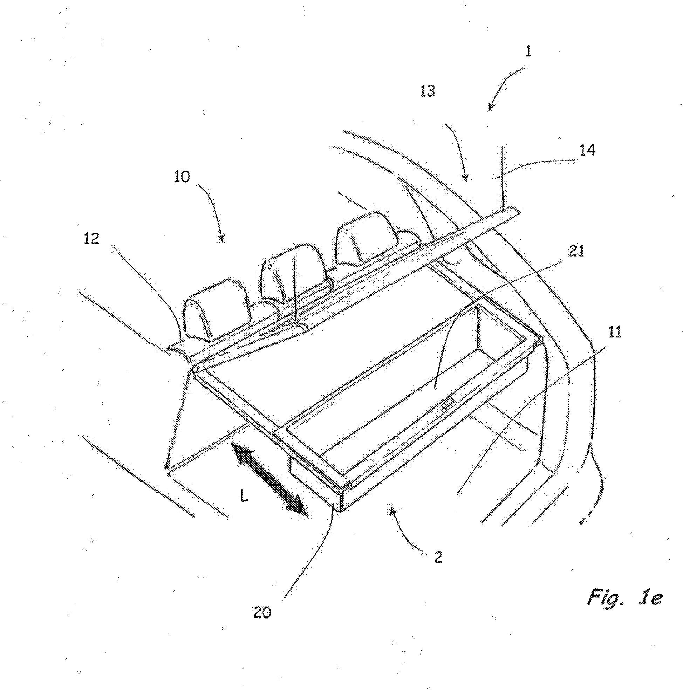

Alternativ zu einem Verschwenken des Behältnisses 2 mit der Laderaumabdeckung 13 ist es auch möglich, dass ― wie in Figur 1e dargestellt ― das Behältnis 2 nicht mit der Laderaumabdeckung 13 verschwenkt wird. Dadurch ist das Behältnis 2 nach dem Hochklappen der Laderaumabdeckung 13 zum Be- oder Entladen zugänglich. In dem dargestellten Ausführungsbeispiel ist das Behältnis 2 zudem in Fahrzeuglängsrichtung, wie durch den Pfeil L schematisch angedeutet, verschiebbar gelagert. Dadurch kann eine Anordnung des Behältnisses 2 in dem Laderaum 11 entsprechend einer Beladung des Laderaums optimiert werden. Außerdem weist, wie in Fig. 1b dargestellt, der in Fahrzeugrichtung betrachtet hintere Teil 13b der Laderaumabdeckung 13 einen öffenbaren Deckel auf.

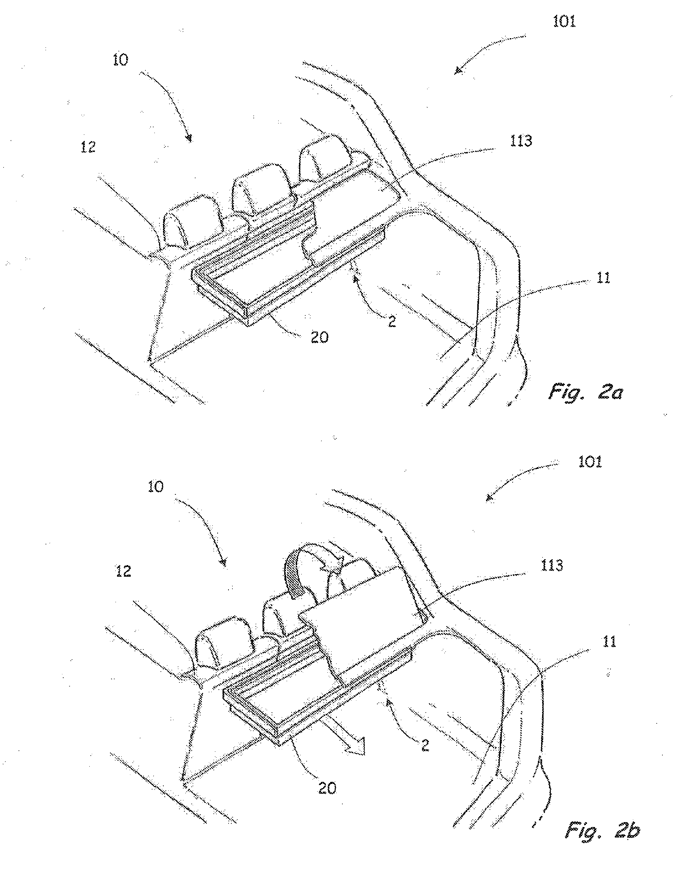

Figur 2a und 2b zeigen ein Fahrzeug 101 mit einem Stufenheck, in welchem ebenfalls ein Behältnis 2 in einem Laderaum 11 angeordnet ist. Das Behältnis 2 ist dabei unterhalb einer vom Fahrgastraum 10 aus zugänglichen Heckablage oder Hutablage 113 angeordnet. Wie in Figur 2b erkennbar, ist die Heckablage 113 um eine quer zur Fahrzeuglängsachse verlaufende Achse verschwenkbar, so dass das Behältnis 2 vom Fahrgastraum 10 aus zugänglich ist. Die Schwenkbewegung ist in Figur 2b durch einen Pfeil angedeutet. Alternativ oder zusätzlich kann das Behältnis 2 auch in Fahrzeugrichtung verschiebbar gelagert sein, so dass das Behältnis 2 zum Be- und/oder Entladen in Richtung des Fahrzeughecks verschiebbar ist, wie durch einen Pfeil in Figur 2b angedeutet.

Wie die zwei Beispiele der Figuren 1a bis 1e und Figuren 2a, 2b zeigen, kann ein entsprechendes Behältnis 2 in beliebigen Fahrzeugen mit Rollo- oder Hartschalen-Laderaumabdeckungen, mit Hutablagen oder dergleichen eingesetzt werden, wobei jeweils durch die Verformbarkeit des Behältnisses 2 dessen Volumen optimal an einen Bedarf angepasst werden kann.

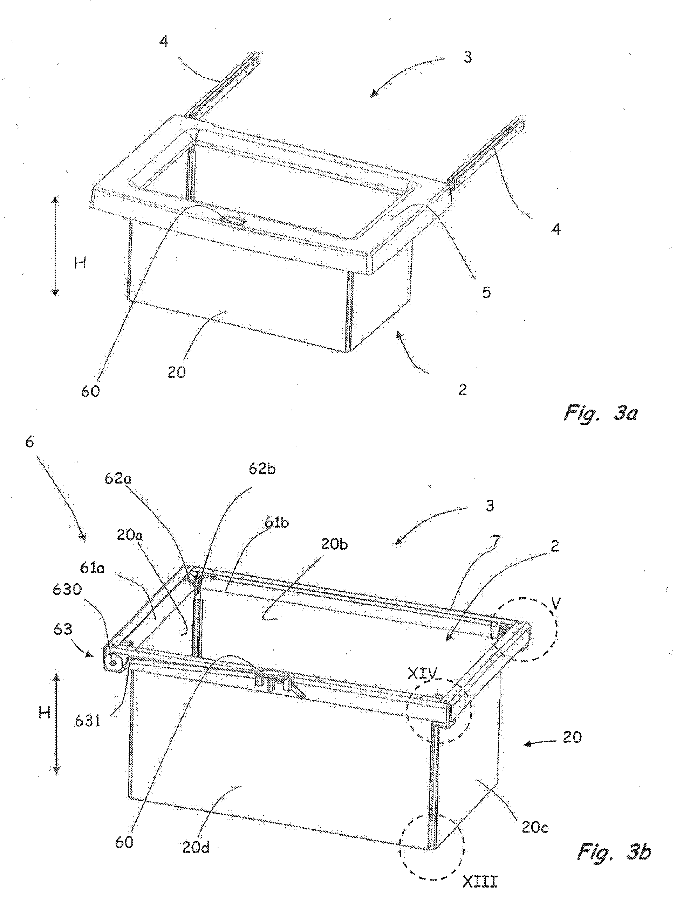

Figur 3a zeigt schematisch eine erfindungsgemäße Vorrichtung 3 zum Verstauen von Gegenständen umfassend ein selbstraumschaffendes Behältnis 2. Das dargestellte Behältnis 2 ist mittels Schienen 4 in einem in den vorangegangenen Figuren dargestellten Fahrzeug 1, 101 verschiebbar anbringbar. Dabei kann eine Anbringung derart erfolgen, dass das Behältnis 2 wie in den vorangegangenen Figuren in Fahrzeugrichtung verschiebbar ist und/oder dass das Behältnis 2 quer zur Fahrzeugrichtung verschiebbar ist. Die Vorrichtung 3 umfasst eine Abdeckung 5, durch welche eine in Figur 3a verdeckte Verstelleinrichtung zur Veränderung des Staufachvolumens abgedeckt ist. Zum Betätigen der Verstelleinrichtung ist an der Abdeckung 5 ein Taster 60 vorgesehen, dessen Funktion im Folgenden detaillierter beschrieben wird.

Figur 3b zeigt die Vorrichtung 3 gemäß Figur 3a, wobei die Schienen 4 und die Abdeckung 5 entfernt wurden, so dass die Verstelleinrichtung 6 zur Veränderung der Höhe H des Behältnisses 2 sichtbar ist. Wie in Figur 3b erkennbar, umfasst die Verstelleinrichtung 6 der dargestellten Vorrichtung 3 vier Wickelwelle 61, wobei in Figur 3b nur zwei Wickelwellen 61 a, 61 b sichtbar sind. Das dargestellte Behältnis 2 ist quaderförmig und umfasst vier Seitenwände 20a, 20b, 20c, 20d, welche aneinander angrenzend angeordnet und miteinander in den Ecken verbunden sind. Die Seitenwände 20a, 20b, 20c, 20d sind durch flexible Flächengebilde gebildet, welche jeweils auf einer zugehörigen Wickelwelle 61 a, 61 b auf- und abwickelbar angebracht sind. Eine Lagerung der Wickelwellen 61 a, 61 b erfolgt in dem dargestellten Ausführungsbeispiel über einen Rahmen 7. Die Wickelwellen 61 a, 61 b sind in dem dargestellten Ausführungsbeispiel an ihren Stirnseiten über Kegelräder 62a, 62b miteinander verbunden, so dass die Bewegung der Wickelwellen 61 a, 61 b synchronisiert ist. Durch Auf- oder Abwickeln der Seitenwände 20a, 20b, 20c, 20d von den jeweiligen Wickelwelle 61 a, 61 b wird eine Höhe H der Wandung 20 und damit ein Staufachvolumen des Behältnisses 2 variiert. Die Wickelwelle 61 a, 61 b weisen vorzugsweise jeweils eine nicht dargestellte Wickelfeder (auch als Federmotor oder Federspeicheranordnung bezeichnet) auf, wobei die Seitenwände 20a bis 20d entgegen der Kraft der Wickelfedern von der jeweiligen Wickelwelle 61 a, 61 b abwickelbar sind.

Ein Abwickeln der Seitenwände 20a bis 20d von den jeweiligen Wickelwellen 61 a, 61 b erfolgt beispielsweise durch Aufbringen einer Kraft. Zum Aufbringen einer Kraft kann beispielsweise ein nicht dargestellter Gegenstand in das Behältnis 2 eingelegt werden, wobei ein Abwickeln der Seitenwände 20a bis 20d von den Wickelwellen 61 a, 61 b aufgrund der Gewichtskraft des eingelegten Gegenstands erfolgt. Daneben ist es auch möglich, dass die Kraft durch einen Nutzer manuell aufgebracht wird, indem ein nicht sichtbarer Boden des Behältnisses 2 in eine Abwickelrichtung gedrückt wird. In wieder anderen Ausgestaltungen ist ein elektrischer und/oder elektronischer Antrieb zum Abwickeln und/oder Aufwickeln der Seitenwände 20a bis 20d vorgesehen. Um das Behältnis 2 entgegen der Kraft der Wickelfedern in einer gewünschten Größe zu arretieren, ist eine Einzugssperre 63 vorgesehen. Die dargestellte Einzugssperre 63 ist als Ratschentrieb gestaltet, wobei durch die Einzugssperre nur ein Aufwickeln der Seitenwände 20a bis 20d auf die zugehörigen Wickelwellen 61 a, 61 b, nicht jedoch ein Abwickeln verhindert wird. Die Einzugssperre 63 umfasst zu diesem Zweck ein Zahnrad 630 mit asymmetrischen Zahnflanken und eine Sperrklinke 631. Die Sperrklinke 631 ist mit der Taste 60 wirkverbunden. Im dargestellten Ausführungsbeispiel erfolgt ein Lösen der Einzugssperre 63 durch Drücken der Taste 60. Durch die dargestellte Einzugssperre 63 wird eine Auslängung der Wandung 20 nicht verhindert.

Die Höhe H der Wandung 20 des dargestellten Behältnisses 2 ist durch Auf- oder Abwickeln der Seitenwände 20a bis 20d von den jeweiligen Wickelwelle 61a, 61 b variierbar. Die Wandung 20 des dargestellten Behältnisses 2 ist dabei durchgehend umlaufend. In anderen Ausgestaltungen weist ein Staubehältnis keine geschlossene Wandung auf. Das Staubehältnis kann beispielsweise nur zwei, sich gegenüberliegende Seitenwände aufweisen, wobei die Seitenwände jeweils auf einer Wickelwelle aufwickelbar sind. Durch eine synchronisierte Drehbewegung der Wickelwellen wird dabei eine Auflagefläche des Staubehältnisses parallel verschoben. In anderer Ausgestaltung ist es denkbar, dass die gegenüberliegenden Wickelwellen zur Schrägstellung des Bodens unterschiedlich bewegt werden und/oder das nur eine Wickelwellen zur Veränderung des Volumens eines Staubehältnisses vorgesehen ist.

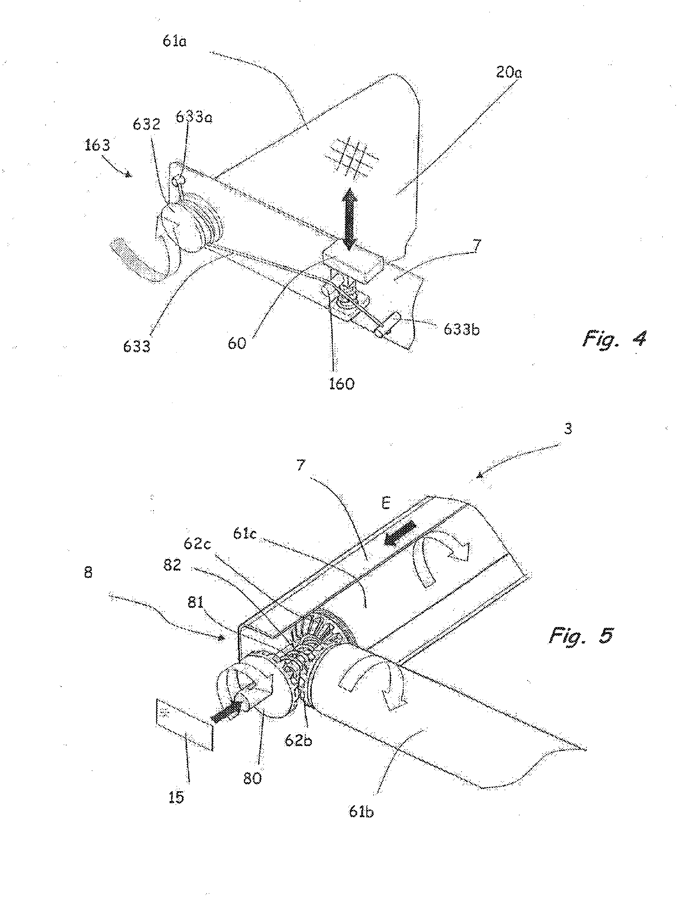

Figur 4 zeigt eine alternative Einzugssperre oder Arretiereinrichtung 163 mit einer Spule 632, welche koaxial zu der Wickelwelle 61 a angeordnet und mit dieser drehfest verbunden ist. Die als Schlingenbremse ausgestaltet Arretiereinrichtung 163 umfasst weiter ein Band 633, dass auf die mit der Wickelwelle 61 a verbundene Spule 632 bei einer Drehung der Spule 632 aufwickelbar ist bzw. von dieser abgewickelt wird. Das Band 633 ist an Befestigungspunkten 633a, 633b seitlich der Spule 632 an dem Rahmen 7 befestigt, wobei das Band 633 über einen an der Taste 60 vorgesehenen Umlenkzapfen 160 geführt ist. Durch den Umlenkzapfen 160 wird das Band 633 gespannt und aufgrund der Reibung eine Drehung der Spule 632 und damit auch eine Drehung der Wickelwelle 61 a verhindert. Durch Betätigen der Taste 60 wird die Reibkraft des Bandes 633 an der Spule 632 verringert, so dass sich die Wickelwelle 61 a beispielsweise aufgrund der Kraft der nicht dargestellten Wickelfeder zum Aufwickeln der Rollobahn oder Seitenwand 20a drehen kann.

Aufgrund von Erschütterungen, beispielsweise aufgrund von Bodenwellen, größeren Unebenheiten in einer Fahrbahn, extrem hohen Beschleunigungen, Bremseingriffen oder dergleichen, kann im Gebrauch, d.h. bei einem Transport eines Gegenstandes in dem Staubehältnis 2, eine Kraft auf die Wickelwelle einwirken, welche eine Auslängung der Wandung 20 als Folge hat. Erfindungsgemäß ist daher eine Fixiereinrichtung vorgesehen, durch welche eine Drehbewegung der Wickelwellen 61 a, 61 b zumindest bei einem Transport sperrbar ist, so dass beim Transport eine Auslängung der Wandung 20 sicher verhindert wird.

Figur 5 zeigt ein Detail V der Vorrichtung 3 gemäß Figur 3b in einer perspektivischen Draufsicht auf die Rückwand 20b gemäß Figur 3b. Zum besseren Verständnis sind verschiedene Details in Figur 5 nicht dargestellt. So ist beispielsweise der Rahmen 7 zum Lagern der Wickelwellen 61 b, 61 c in Figur 5 nur teilweise dargestellt. Dadurch sind in Figur 5 die Wickelwelle 61 b sowie eine im Wesentlichen im rechten Winkel daran anschließende Wickelwelle 61 c besser sichtbar. Die Drehrichtungen der Wickelwellen 61 b, 61 c sind durch Pfeile angedeutet. An den Enden der Wickelwellen 61 b, 61 c sind jeweils Kegelräder 62b, 62c angeordnet, wobei die Kegelräder 62b, 62c für eine Synchronisation der Bewegung der Wickelwellen 61 b, 61 c miteinander kämmen.

Die erfindungsgemäße Fixiereinrichtung 8, durch welche eine Drehbewegung der Wickelwellen 61 b, 61 c zumindest für einen Transport sperrbar ist, umfasst ein koaxial zu der Wickelwelle 61 c angeordnetes Sperr-Kegelrad 80, welches über eine Welle 81 im Wesentlichen drehfest und axial verschiebbar mit dem Kegelrad 62c der Wickelwellen 61 c verbunden ist. Zwischen dem Kegelrad 62c und dem Sperr-Kegelrad 80 ist eine Feder 82 koaxial zu der Welle 81 angeordnet, welche das Sperr-Kegelrad 80 in eine Richtung weg von dem Kegelrad 62c belastet. In anderen Worten werden das Sperr-Kegelrad 80 und das koaxial dazu angeordnete Kegelrad 62c durch die Feder 82 auf Abstand gehalten. Durch Aufbringen einer Kraft in Axialrichtung der Welle 81 kann das Sperr-Kegelrad 80 in Richtung des Kegelrads 62c entgegen der Kraft der Feder 82 verschoben werden. Dadurch kommen die Zähne des Sperr-Kegelrads 80 in Eingriff mit den Zähnen des zwischen dem Sperr-Kegelrad 80 und dem koaxialen Kegelrad 62c angeordneten Kegelrads 62b. Da das Sperr-Kegelrad 80 drehfest mit dem Kegelrad 62c verbunden ist und beide Kegelräder mit dem Kegelrad 62b in Eingriff stehen, wird eine Drehung der Wickelwellen 61 b, 61 c so sicher unterbunden.

In einer Ausgestaltung wird das Staubehältnis 2 beispielsweise in eine Einschubrichtung E verschoben, wodurch das Sperr-Kegelrad 80 gegen eine Fahrzeugwand 15 anschlägt. Durch ein weiteres Verschieben in Einschubrichtung E wird somit durch die Wand 15 das Sperr-Kegelrad 80 in Richtung des Kegelrads 62c gedrückt, so dass eine Drehung der Wickelwellen 61 b, 61 c sowie der damit synchronisierten, in Figur 5 nicht dargestellten verbleibenden Wickelwellen der Vorrichtung 3, gesperrt wird. Durch eine Bewegung des Staubehältnisses 2 entgegen der Einschubrichtung E wird die Fixierung wieder gelöst. Dabei drückt die Feder 82 das Sperr-Kegelrad 80 wieder weg von dem Kegelrad 62c.

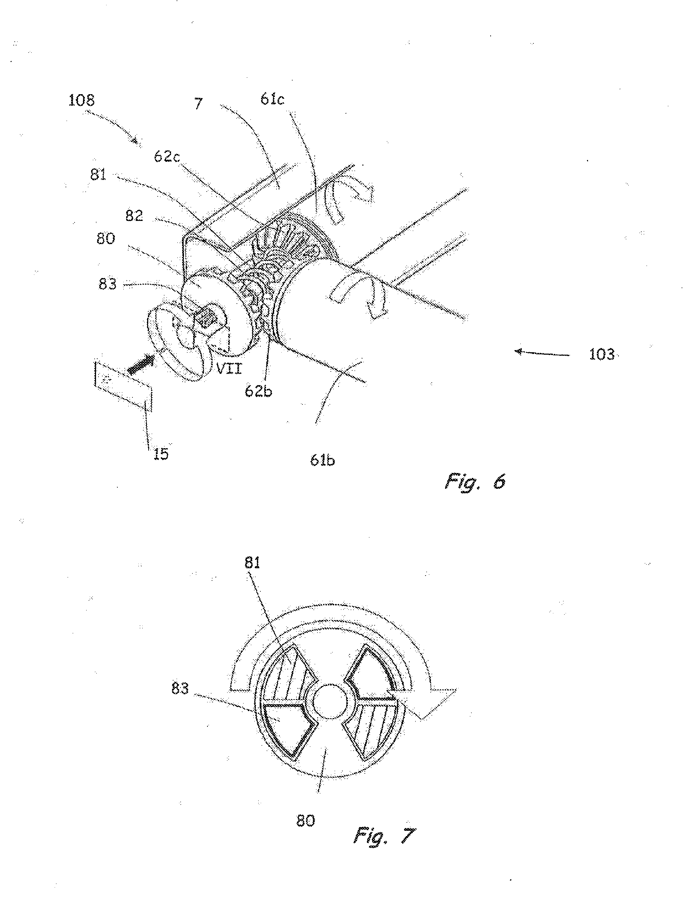

Figur 6 zeigt das Detail gemäß Figur 5 einer erfindungsgemäßen Vorrichtung 103, wobei eine alternative Fixiereinrichtung 108 vorgesehen ist, welche im Wesentlichen der Fixiereinrichtung 8 gemäß Figur 5 entspricht. Für gleiche Bauteile werden dabei einheitliche Bezugszeichen verwendet und auf eine Beschreibung dieser Bauteile wird verzichtet. Im Unterschied zu der Fixiereinrichtung 8 gemäß Figur 5 ist bei der Fixiereinrichtung 108 gemäß Figur 6 zwischen dem Sperr-Kegelrad 80 und dem Kegelrad 62c ein Dämpfungselement angeordnet. In der dargestellten Ausführungsform ist die Welle 81 fest mit dem Kegelrad 62c der Wickelwelle 61 c verbunden, wobei das Sperr-Kegelrad 80 axial verschiebbar auf der Welle 81 gelagert ist. Figur 7 zeigt schematisch eine Schnittansicht durch eine Ebene VII gemäß Figur 6. Wie in Figur 7 erkennbar, sind das Sperr-Kegelrad 80 und die Welle 81 für eine Drehungsübertragung durch miteinander verzahnte Anschläge gekoppelt. Für eine Lastspitzenabfederung, d.h. um zu verhindern, dass hohe Kräfte über das Sperr-Kegelrad 80 auf die Vorrichtung übertragen werden, sind in dem in Figur 6 und 7 dargestellten Ausführungsbeispiel Gummidämpfer 83 zwischen dem Sperr-Kegelrad 80 und der Welle 81 angeordnet. Die Verbindung zwischen dem Sperr-Kegelrad 80 und dem Kegelrad 62c bleibt dabei jedoch drehfest im Sinne der Erfindung, d.h. eine Drehung wird von dem Kegelrad 62c auf das Sperr-Kegelrad 80 übertragen und umgekehrt.

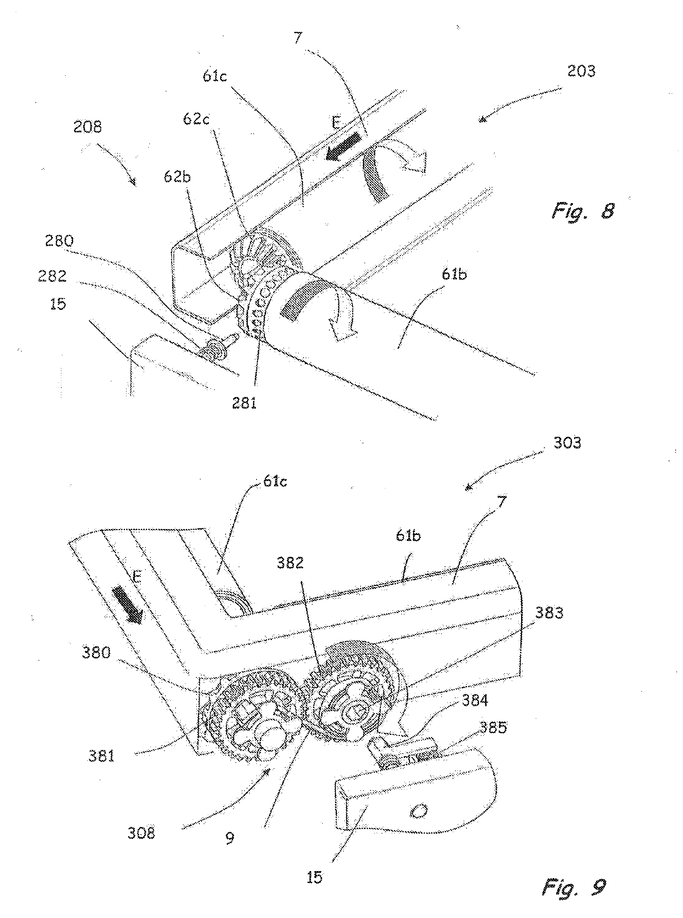

Figur 8 zeigt das Detail V gemäß Figur 3b in einer weiteren Ausführungsform einer erfindungsgemäßen Vorrichtung 203 mit einer Fixiereinrichtung 208. Für Bauteile, welche den Bauteilen gemäß den Figuren 5 und 6 entsprechen, werden dabei die gleichen Bezugszeichen verwendet und auf eine Beschreibung dieser Bauteile wird verzichtet. Im Unterschied zu der Ausführungsform gemäß Figur 5 und 6 ist bei der Ausführungsform gemäß Figur 8 zwischen der quer in Fahrzeugrichtung angeordneten Wickelwelle 61 b und dem zugehörigen Kegelrad 62c ein Lochkranz 281 vorgesehen. Die Fixiereinrichtung 208 umfasst einen Dorn 280, welcher beim Verschieben des Staubehältnisses 2 in eine Einschubrichtung E in ein Loch des Lochkranzes eingeführt wird. In der dargestellten Ausführungsform ist der Dorn 280 axial verschiebbar an einer Fahrzeugwand 15 gelagert. Trifft der Dorn 280 beim Verschieben des Staubehältnisses 2 nicht auf ein Loch des Lochkranzes 281, so wird der Dorn in Richtung der Fahrzeugwand 15 eingedrückt. Dreht sich die Wickelwelle 61 b und damit der fest mit dieser verbundene Lochkranz 281 aufgrund einer Erschütterung, so rastet der Dorn aufgrund einer Kraft der Feder 282 in das nächstmögliche oder benachbarte Loch des Lochkranzes 281 ein. Dadurch wird eine Drehung der Wickelwelle 61 b und damit auch einer mit dieser durch die Kegelräder 62b, 62c verbundenen Wickelwelle 61 c verhindert. Um eine Übertragung von Lastspitzen zu vermeiden, kann der Dorn 280 zumindest teilweise aus einem dämpfenden Material ausgeformt werden. Daneben ist es denkbar, den Dorn 280 mittels eines Dämpfungselements (nicht dargestellt) an der Fahrzeugwand 15 zu lagern. In einer anderen Ausgestaltung ist die Vorrichtung 203 nicht verschiebbar in dem Kraftfahrzeug gelagert. Dabei kann vorgesehen sein, dass der Dorn 282 an einer verschwenkbaren Hutablage 113 gemäß Fig. 2a und 2b vorgesehen ist und beim Verschwenken in den Lochkranz 281 eingreift.

Figur 9 zeigt das Detail V gemäß Figur 3b von einem weiteren Ausführungsbeispiel der erfindungsgemäßen Vorrichtung 303, wobei für gleiche Bauteile einheitliche Bezugszeichen verwendet werden. Die Vorrichtung 303 gemäß Figur 9 weist eine Fixiereinrichtung 308 auf, welche ein Sperr-Kegelrad 380 umfasst, das drehfest und koaxial mit einem Zahnrad 381 verbunden ist. Das Zahnrad 381 kämmt mit einem zweiten Zahnrad 382, wobei die Zahnräder 381 und 382 drehbar an einer Außenseite des Rahmen 7 gelagert sind. Das Zahnrad 382 weist eine Aussparung 383 mit einer nicht rotationssymmetrischen Kontur auf. In die Aussparung 383 greift beim Einschieben des Staubehältnisses 2 in eine Einschieberichtung E ein Dorn 384 ein, welcher an einer Fahrzeugwand 15 gelagert ist. Der Dorn ist mittels eines Gummidämpfers 385 im Wesentlichen drehfest an der Fahrzeugwand 15 gelagert, so dass eine Drehbewegung der Wickelwelle 61 c und damit auch der mit dieser verbundenen Wickelwelle 61 b durch Einführen des Dorns 384 verhindert wird. Durch den Gummidämpfer 385 ist eine Lastspitzenabfederung möglich, wobei sich zum Abfedern der Lastspitzen der Dorn 384 gegen den Gummidämpfer 385 bewegt. Hierfür ist in dem dargestellten Ausführungsbeispiel der Dorn 384 mit einem Ausleger gestaltet. Es sind jedoch auch andere Ausführungsformen denkbar.

Die beiden Zahnräder 381, 382 sind weiter durch ein Band 9 miteinander verbunden. Das Band 9 wirkt als Auszugbegrenzung. Die Zahnräder 381, 382 sind über ein Band, im dargestellten Beispiel ein Flachband, derart miteinander verbunden, dass je nach Drehrichtung das Band 9 von dem einen Zahnrad abgewickelt und auf das andere Zahnrad aufgewickelt wird. In dem dargestellten Ausführungsbeispiel erfolgt ein Abwickeln einer Rollobahn von der Wickelwelle 61 c durch Drehen der Wickelwelle im Uhrzeigersinn. Die Wickelwelle 61 c ist mit einem nicht dargestellten Kegelrad drehfest verbunden. Dieses wirkt mit einem in Figur 9 ebenfalls nicht dargestellten Kegelrad der Wickelwelle 61 b zusammen. Die Bewegung des Kegelrads der Wickelwelle 61 b wird auf das Sperr-Kegelrad 380 und damit auf das Zahnrad 381 übertragen, so dass das Zahnrad 381 zum Abwickeln einer auf der Wickelwelle 61 c aufgewickelten Seitenwand oder Rollobahn gegen den Uhrzeigersinn gedreht wird. Das mit dem Zahnrad 381 kämmend verbundene Zahnrad 382 dreht wie durch einen Pfeil dargestellt im Uhrzeigersinn. Dabei wird das Band 9 von einer Halterung an dem Zahnrad 382 abgewickelt und auf eine entsprechende Aufnahme an dem Zahnrad 381 aufgewickelt. Sobald das ganze Band 9 von dem Zahnrad 382 abgewickelt ist, ist eine weitere Bewegung der Zahnräder in die durch den Pfeil dargestellte Richtung gesperrt. Dadurch wird auch eine Bewegung der Wickelwelle 61 c in eine Abwickelrichtung, d.h. im dargestellten Ausführungsbeispiel im Uhrzeigersinn, gesperrt. Die Länge des Bandes 9 bestimmt somit neben einem Durchmesser der Zahnräder und/oder einen Wickelradius für das Band 9 eine maximale Auszugbewegung der Wickelwelle 61 c. Dadurch ist es beispielsweise möglich, dass eine Auszugsbewegung einer auf die Wickelwelle 61c aufgewickelten Rollobahn oder Seitenwand so begrenzt wird, dass auf der Wickelwelle 61c immer zumindest eine Sicherungsumschlingung der Rollobahn oder der Seitenwand vorhanden ist. Die Rollobahn oder Seitenwand kann dabei beispielsweise durch Verklebung oder dergleichen an der Wickelwelle 61c befestigt sein. In einer vorteilhaften Ausgestaltung der Erfindung ist das Band 9 zumindest teilweise aus einem elastisch-dämpfenden Material gefertigt, so dass auch bei einem schnellen Abwickeln der Rollobahn von der Wickelwelle 61c am Anschlag die Kräfte gedämpft werden können. Wird die Wickelwelle 61 c beispielsweise aufgrund der Kraft einer nicht dargestellten Wickelfeder oder dergleichen so bewegt, dass die Rollobahn oder Seitenwand wieder auf die Wickelwelle 61 c aufgewickelt wird, so kann das Flachband 9 derart gewählt werden, dass auch ein Anschlag beim Aufwickeln der Rollobahn oder Seitenwand gedämpft wird.

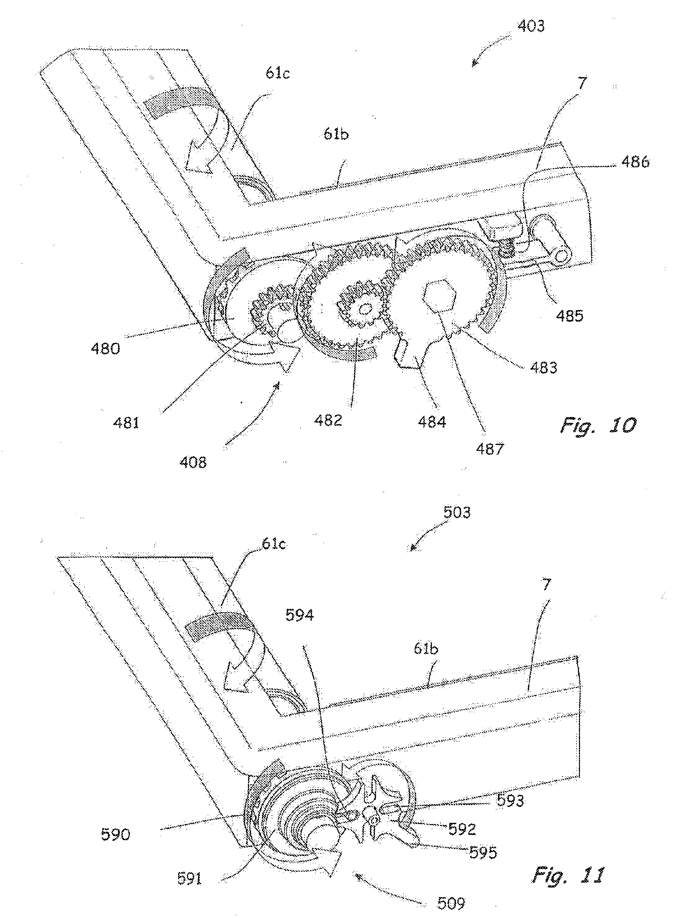

Figur 10 zeigt das Detail V gemäß Figur 3b einer weiteren erfindungsgemäßen Vorrichtung 403. Die Vorrichtung 403 umfasst eine Fixier- und Auszugsbegrenzungseinrichtung 408 mit einem Sperr-Kegelrad 480, welches über nicht dargestellte Kegelräder der Wickelwellen 61 b, 61 c mit diesen synchronisiert ist, so dass ― wie dargestellt ― bei einer Drehung der Wickelwelle 61 c im Uhrzeigersinn das Sperr-Kegelrad 480 gegen den Uhrzeigersinn gedreht wird. Das Sperr-Kegelrad 480 ist mit einem Zahnrad 481 koaxial und drehfest verbunden, welches mit einem größeren Zahnkranz eines Doppelzahnrads 482 kämmt. Ein kleineres Zahnrad des Doppelzahnrads 482 kämmt mit einem dritten Zahnrad 483. Das Zahnrad 483 dreht somit in die gleiche Richtung wie das mit dem Sperr-Kegelrad 480 verbundene erste Zahnrad 481, wobei jedoch aufgrund der zweifachen Übersetzung eine Drehgeschwindigkeit des dritten Zahnrads 483 deutlich geringer ist als eine Drehgeschwindigkeit des ersten Zahnrads 481. Das dritte Zahnrad 483 weist ein sich in radialer Richtung erstreckendes Hebelelement 484 auf, welches bei einer Drehung des Zahnrads 483 an einen Anschlag 485, welcher mit dem Rahmen 7 verbunden ist, anschlägt, so dass eine Drehbewegung des dritten Zahnrads 483 begrenzt ist. Diese Drehbegrenzung wirkt sich über die Zahnräder 483, 482, 481 auf das Sperr-Kegelrad 480 und damit auf die Wickelwellen 61 b, 61 c aus. Um hohe Kräfte beim Erreichen des Anschlags 485 zu vermeiden, ist der Anschlag 485 über eine Feder 486 mit dem Rahmen 7 verbunden, durch welche die Kräfte beim Erreichen des Anschlags abgefangen werden. Eine Drehbewegung entgegen der durch die Pfeile dargestellten Richtungen ist durch eine Kollision des Hebels 484 mit dem kleineren Zahnrad des Doppelzahnrads 482 begrenzt. Dabei ist in bestimmten Ausgestaltungen an dem Hebel 448 eine dämpfende Schicht aus einem Gummi, Silikon oder dergleichen angebracht. In anderen Ausgestaltungen ist eine maximale Abwickellänge der Seitenwände von den Wickelwellen 61 b, 61 c so gewählt, dass kein Kontakt des Anschlags 484 mit dem Zahnrad 482 stattfindet. In dem dargestellten Ausführungsbeispiel weist das dritte Zahnrad 483 eine nicht-rotationssymmetrische Aussparung 487 auf, in welche beispielsweise ein Dorn gemäß Figur 9 für eine Transport-Fixierung eingreifen kann. Daneben ist es auch denkbar, eine Transportfixierung durch Mittel zu gestalten, welche unabhängig von der Auszugsbegrenzungseinrichtung sind.

Figur 11 zeigt ein Detail V gemäß Figur 3b einer erfindungsgemäßen Vorrichtung 503 gemäß einem weiteren Ausführungsbeispiel der Erfindung mit einer Auszugsbegrenzungseinrichtung 509. Die Auszugsbegrenzungseinrichtung 509 umfasst ein Sperr-Kegelrad 590, weiches mit einem nicht dargestellten, komplementären Kegelrad der Wickelwelle 61 b kämmt. Das Sperr-Kegelrad 590 ist mit einem Teller 591 eines Malteserkreuz-Getriebes drehfest verbunden oder einteilig mit diesem ausgebildet. Das Malteserkreuz-Getriebe umfasst neben dem Teller 591 ein malteserkreuzförmiges Bauteil 592 mit vier Schlitzen 593. Auf den Teller 591 ist ein Zapfen 594 angeordnet, welcher bei einer Drehung des Tellers 591 in einen Schlitz 593 des malteserkreuzförmigen Bauteils 592 eingreift und dieses so lange mitnimmt, bis der Zapfen 594 wieder aus dem Schlitz 593 austritt. Eine kontinuierliche Drehbewegung des Tellers wird somit auf eine intermittierende Drehbewegung des malteserkreuzförmigen Bauteils 592 übertragen. An dem dargestellten malteserkreuzförmigen Bauteil 592 ist weiter ein sich in Radialrichtung erstreckender Anschlag 595 vorgesehen. Durch den Anschlag 595 wird eine Drehbewegung des Tellers 591 im Kontakt gesperrt. Dadurch sperrt das drehfest mit dem Teller 591 angeordnete Sperr-Kegelrad 590 eine Drehbewegung der Wickelwellen 61 b, 61 c, so dass ein Abwickeln einer Seitenwand oder Rollobahn von den Wickelwellen 61 b, 61 c und/oder ein Aufwickeln dergleichen auf die Wickelwellen 61 b, 61 c begrenzt wird. Die dargestellte Auszugsbegrenzungseinrichtung 509 ist dabei nicht mit einer Transport-Fixiereinrichtung gemeinsam ausgebildet. Es ist jedoch in anderen Ausgestaltungen der Erfindung vorgesehen, beispielsweise durch eine nicht-rotationssymmetrische Aussparung an dem Teller 591, in welchen ein entsprechender Dorn eingreifen kann, die Auszugsbegrenzungseinrichtung 509 mit einer Transport-Fixiereinrichtung zu kombinieren.

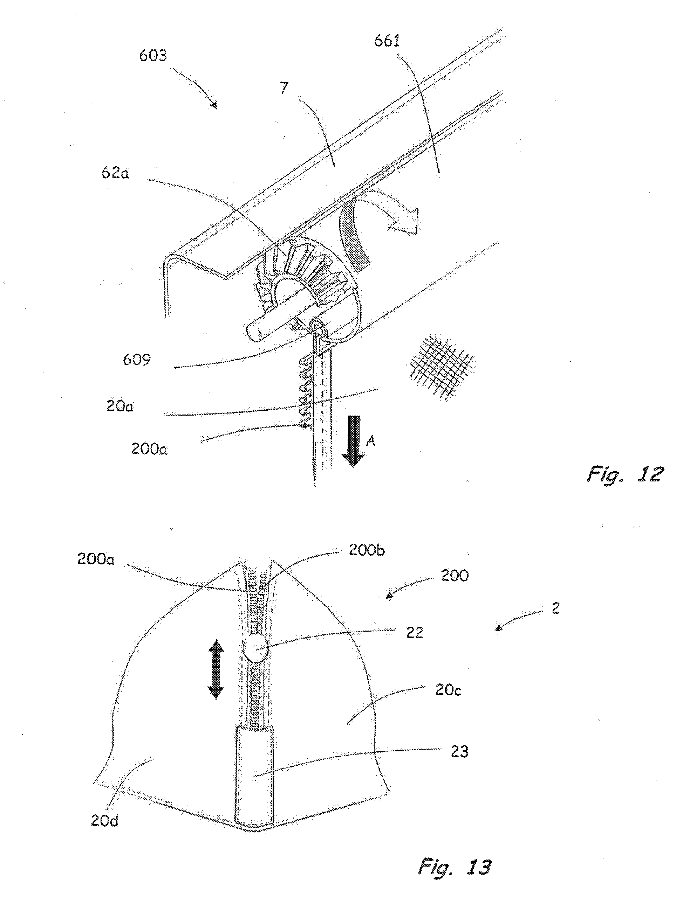

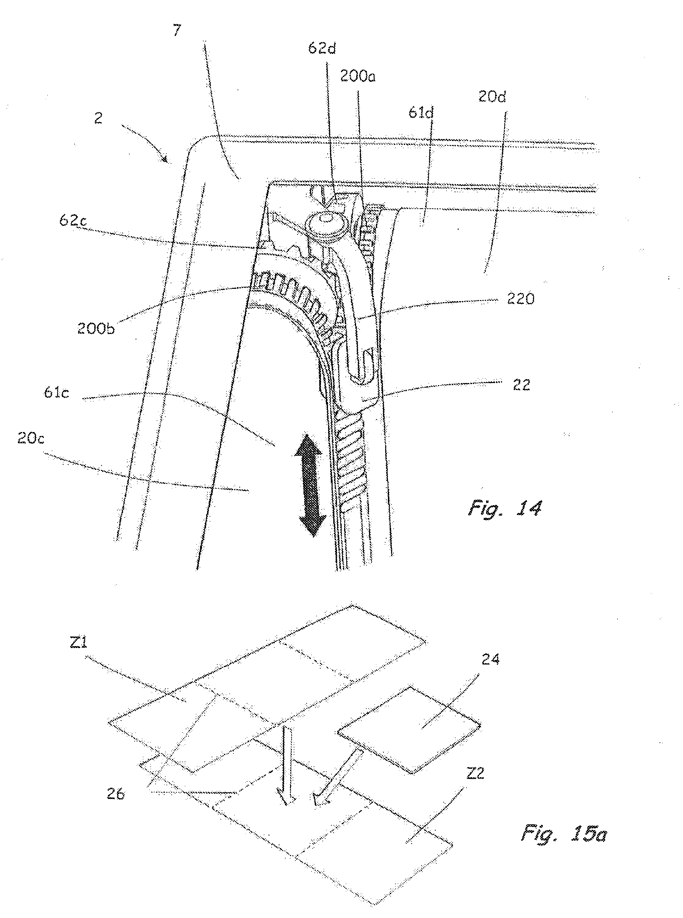

Figur 12 zeigt einen Teil einer Wickelwelle 661 einer erfindungsgemäßen Vorrichtung 603 gemäß einem weiteren Ausführungsbeispiel der Erfindung. Die Wickelwelle 661 ist dabei in einem Rahmen 7 gelagert. Auf der Wickelwelle 661 ist eine als flexibles Flächengebilde gestaltete Seitenwand 20a auf- und abwickelbar angebracht, wobei die Wickelwelle 661 als Ω-Rohr ausgebildet ist, an welchem die Seitenwand 20a mittels eines Keders 609 wie dargestellt befestigt werden kann. Zum Antrieb der Wickelwelle 661 ist diese mit einem Kegelrad 62a ausgebildet. Die dargestellte Seitenwand 20a weist an der Kante Krampen 200a eines weiter unten im Detail unter Bezugnahme auf die Figuren 13 und 14 beschriebenen Reißverschlusses auf.

Umfasst das Staubehältnis ― wie beispielsweise in Figur 3b dargestellt ― vier Seitenwände 20a bis 20d, so ist in einer vorteilhaften Ausgestaltung eine Verschlusseinrichtung, beispielsweise ein Reißverschluss, vorgesehen, um die Seitenwände 20a bis 20d beim Abrollen von den jeweiligen Wickelwellen 61 a, 61 b miteinander zu verbinden. Die Verbindung ist jedoch lösbar, um es beim Verringern des Staufachvolumens zu ermöglichen, dass die Seitenwände 20a bis 20d unabhängig voneinander auf die jeweilige Wickelwelle 61 a, 61 b, 61 c, 61 d aufgewickelt werden können. Als vorteilhafte Verschlusseinrichtung hat sich dabei ein Reißverschluss herausgestellt.

Figur 13 zeigt ein Detail XIII gemäß Figur 3b in einer vergrößerten Darstellung. In Figur 13 sind dabei die Seitenwände 20c, 20d sichtbar, welche Krampen 200a, 200b eines Reißverschlusses 200 aufweisen, die über einen Schlitten oder Schieber 22 miteinander verbindbar bzw. voneinander trennbar. An einem Bodenbereich des Behältnisses 2 ist ein Stopper 23 angebracht. Der Stopper 23 ist beispielsweise aus einem Textil, wobei zum Anbringen des Stoppers 23 eine Ecke des Behältnisses 2 mit einem Stoffstreifen übernäht wird. Der Schlitten oder Schieber 22 stößt an den Stopper 23 an, so dass ein weiteres Öffnen des Reißverschlusses 200 und ein Auseinanderbewegen der Krampen 200a, 200b verhindert wird.

Figur 14 zeigt ein Detail XIV gemäß Figur 3b eines Staubehältnisses 2. Dabei zeigt Figur 14 abschnittsweise die Seitenwände 20c, 20d, welche auf den zugehörigen Wickelwellen 61 c, 61 d auf- und abwickelbar angeordnet sind. Die Seitenwände 20c, 20d weisen an ihren Kanten jeweils Krampen 200a, 200b auf, welche über den Schlitten 22 miteinander verbindbar sind. Der Schlitten 22 ist mittels eines Schlitten- oder Zipperhalters 220 mit dem Rahmen 7 verbunden. Um zu berücksichtigen, dass sich der Durchmesser der Wickelwellen 61 c, 61 d einschließlich der aufgewickelten Seitenwände 20c, 20d beim Aufwickeln der Seitenwände 20c bzw. 20d vergrößert, ist der dargestellte Zipperhalter 220 aus einem flexiblen Material, beispielsweise aus Kunststoff oder als Drahtbügel gestaltet. Alternativ oder zusätzlich ist es möglich, den Zipperhalter 220 verschwenkbar an dem Rahmen 7 zu lagern. Wie in Figur 14 weiter erkennbar, sind die Wickelwellen 61 c, 61 d durch zugehörige Kegelräder 61 c, 62d miteinander synchronisiert.

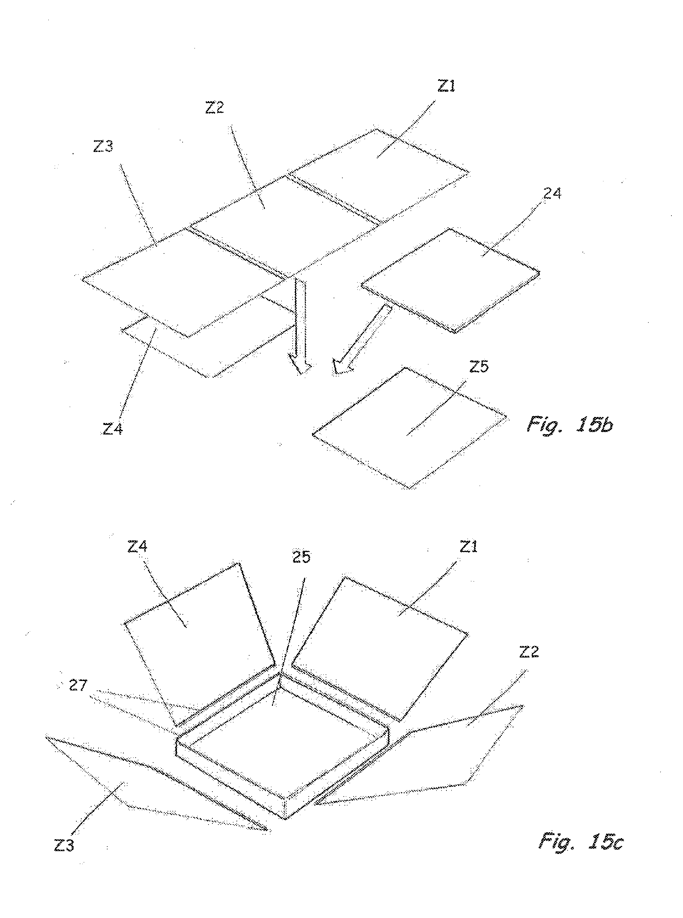

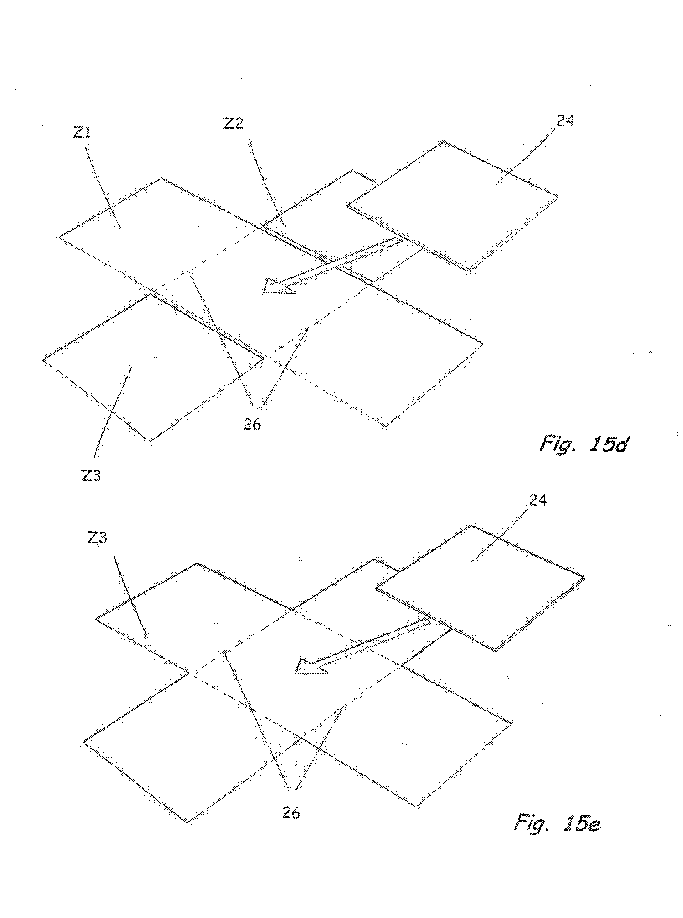

Die Wandung 20 der in den Figuren 1 bis 14 dargestellten Behältnisses 2 ist aus einem flexiblen Flächengebilde, beispielsweise aus einem Tuch, einer Kunststofffolie, einem Netz oder dergleichen gestaltet. Die Figuren 15a bis 15e zeigen verschiedene Zuschnitte des flexiblen Flächengebildes für ein Staubehältnis 2 mit vier Seitenwänden und mit einer im Wesentlichen quadratischen Grundfläche. Die dargestellten Ausführungsformen sind lediglich beispielhaft. Insbesondere kann in Abhängigkeit einer Grundfläche auch ein anderer Zuschnitt vorteilhaft sein. In den Figuren 15a bis 15e sind die Zuschnittsteile mit Z1 bis Z5 bezeichnet. Das Behältnis kann weiter eine Bodenverstärkung 24 oder eine Bodenschale 25 umfassen, welche mit den Zuschnittsteilen Z1 bis Z5 verbindbar ist. Die einzelnen Zuschnittsteile sind über Falt- und/oder Nahtstrecken 26 miteinander verbindbar, insbesondere miteinander verschweißt, verklebt und/oder vernäht. Daneben ist es denkbar, wie beispielsweise in Figur 15c dargestellt, die Zuschnittsteile über Keder 27 mit der Bodenschale 25 zu verbinden. Die Bodenverstärkung 24 wird bei der Ausführungsform gemäß Fig. 15a zwischen den Zuschnittsteilen Z1, Z2 eingearbeitet. Bei den Ausführungsformen gemäß Fig. 15b, 15d und 15e ist die Bodenverstärkung 24 dagegen entnehmbar.

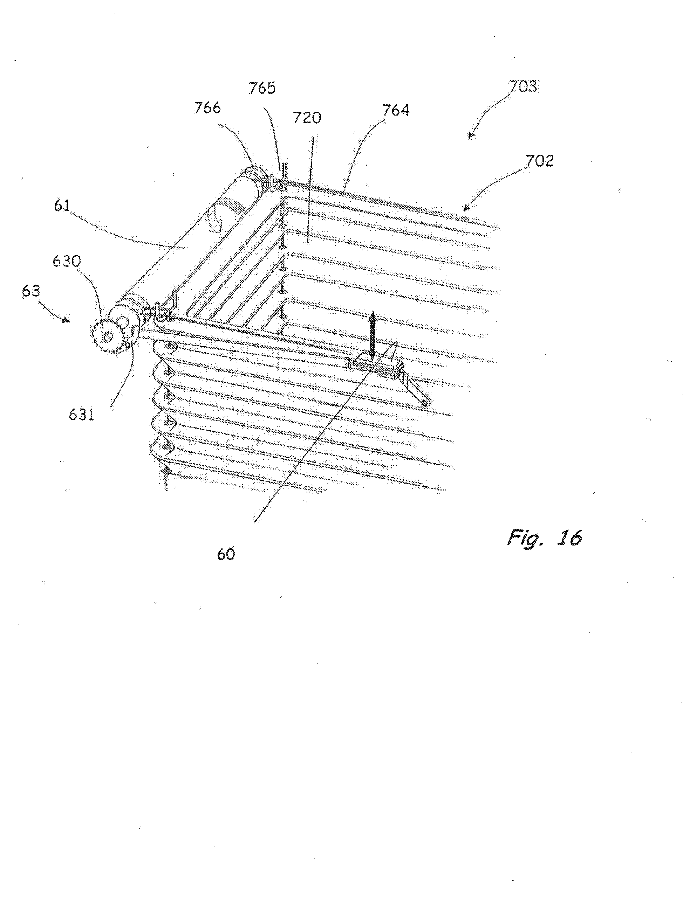

Figur 16 zeigt schematisch ein Behältnis 702 einer erfindungsgemäßen Vorrichtung 703 gemäß einem weiteren Ausführungsbeispiel der Erfindung. Das Behältnis 702 weist eine ziehharmonikaartig faltbare Wandung 720 auf, welche in dem dargestellten Ausführungsbeispiel einen im Wesentlichen rechteckförmigen Grundriss hat und umlaufend ausgebildet ist. Die Vorrichtung 703 weist weiter zwei Wickelwellen 61 auf, von welchen jedoch in Figur 16 nur eine sichtbar ist. An einer nicht sichtbaren Bodenfläche des Behältnisses 702 sind Bänder 764 befestigt, welche durch die Wandung 720 in den vier Ecken geführt sind. Die Bänder 764 sind über Umlenkbügel 765 auf Spulen 766 der Wickelwellen 61 aufwickelbar und von diesen abwickelbar. Dabei können die vier an den vier Ecken vorgesehenen Bänder 764 synchron auf- bzw. abgewickelt werden, so dass ein nicht sichtbarer Boden des Staubehältnisses 702 im Wesentlichen parallel verschoben wird. Eine Synchronisation der Wickelwellen 61 erfolgt beispielsweise über einen nicht dargestellten Riemen.

Daneben ist es jedoch auch denkbar, die Bänder 764 jeweils einzeln zu verstellen, um so eine Schrägstellung des nicht dargestellten Bodens zu erzielen. Zu diesem Zweck können beispielsweise Rutschkupplungen vorgesehen sein, so dass die Bänder 764 unabhängig voneinander auf- bzw. abwickelbar sind.

Die Wickelwelle 61 umfasst vorzugsweise eine nicht sichtbare Wickelfeder, wobei die Bänder 764 zum Vergrößern des Volumens des Staubehältnisses 702 entgegen der Kraft der Wickelfeder von der Wickelwelle 762 abgewickelt werden. Über den Verriegelmechanismus 63 mit dem Zahnrad 630 und der Sperrklinke 631 ist eine Drehbewegung der Wickelwelle 61 und damit ein Aufwickeln der Bänder 764 zum Verringern des Staufachvolumens des Behältnisses 701 sperrbar. Die Sperrklinke 631 ist, wie bereits in Figur 3b dargestellt, zum Lösen mittels einer Taste 60 bedienbar.

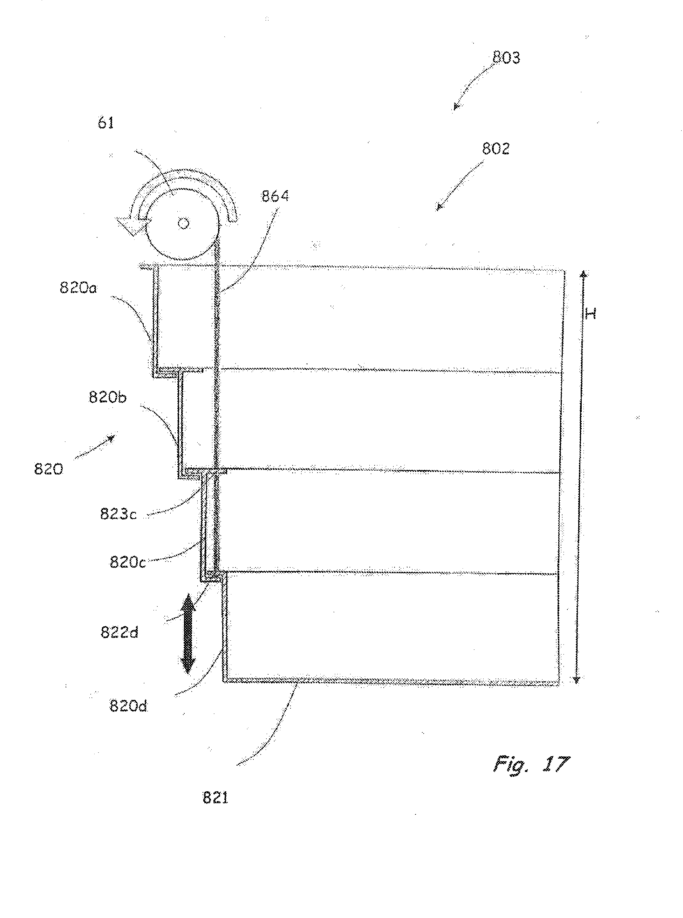

Figur 17 zeigt eine weitere Ausführungsform einer erfindungsgemäßen Vorrichtung 803 mit einem Behältnis 802, welches eine teleskopierbare Wandung 820 aufweist. Die Wandung 820 umfasst eine Vielzahl an Lamellen-Hartschalen 820a bis 820d, im dargestellten Beispiel sind vier Lamellen-Hartschalen 820a bis 820d vorgesehen. Die Lamellen-Hartschalen 820a bis 820d können zur Verringerung eines Staufachvolumens ineinander gestapelt werden. Die unterste Lamellen-Hartschale 820d ist einstückig mit einem Boden 821 ausgebildet. Die dargestellten Lamellen-Hartschalen 820a bis 820d haben jeweils eine im Wesentlichen rechteckförmige Grundfläche. Es sind jedoch auch andere Gestaltungen, beispielsweise mit einer kreisförmigen Grundfläche, denkbar. An der untersten Lamellen-Hartschale 820d sind an den vier Ecken Bänder 864 angebracht, welche auf Wickelwellen 61 aufwickelbar bzw. von diesen abwickelbar sind. Die Verstelleinrichtung umfasst dabei vorzugsweise zwei Wickelwellen 61, wobei jedoch in der Darstellung nur eine Wickelwelle 61 sichtbar ist. Die Wickelwellen 61 sind vorzugsweise miteinander synchronisiert. Eine Synchronisation ist beispielsweise über ein Gestänge oder über ein Zentralband möglich. Eine Höhe H der Wandung 820 ist abhängig von der freien Länge der Bänder 864. In dem dargestellten Zustand weist die Wandung 820 eine maximale Höhe H auf. Durch Aufwickeln der Bänder 864 auf die Wickelwellen 61 wird die freie Länge der Bänder 864 verkürzt und die unterste Lamellen-Hartschale 820d in Richtung der Wickelwelle 61 verschoben, so dass die Höhe H verringert wird. Sobald ein an der Hartschale 820d vorgesehener, nach außen weisender Vorsprung 822d auf einen korrespondierenden, nach innen weisenden Vorsprung 823c der Hartschale 820c trifft, wird die Bewegung weiter auf auch auf diese Hartschale 820c übertragen.

Die Bänder 864 und/oder 764 gemäß den Fig. 16 und 17 sind in einer anderen Ausgestaltung zumindest teilweise nach dem Jalousie-Prinzip, d.h. mit einer Walzenbremse, arretierbar. Bei einem derartigen Prinzip wäre es dann auch denkbar, die einzelnen Bänder 764 bzw. 864 unabhängig voneinander zu bewegen, um so den Boden in Schieflage zu bringen und Gegenstände an unkontrollierten Bewegungen zu hindern.

Die dargestellten im Wesentlichen mechanischen Verstelleinrichtungen sind mit elektronischen Bauteilen beispielsweise zum Bewegen der Wickelwellen, Verriegeln des Staubehältnisses, Anzeigen einer Überlast oder dergleichen koppelbar.

In den dargestellten Ausführungsformen sind die Wickelwellen durch einen Rahmen 7 gelagert, wobei der Rahmen 7 auch zur Anbindung an das Kraftfahrzeug dient. In anderen Ausgestaltungen bilden die Wickelwellen zumindest teilweise selbst einen Rahmen für eine Anbindung an das Kraftfahrzeug.

## Patentansprüche

1. Vorrichtung zum Verstauen von Gegenständen in einem Laderaum (11) eines Kraftfahrzeugs (1, 101) mit einem Staubehältnis (2, 702, 802), das in dem Laderaum (11) des Kraftfahrzeugs anbringbar ist, wobei das Staubehältnis (2, 702, 802) eine Auflagefläche (21, 821) und eine zumindest teilweise elastisch und/oder unelastisch verformbare Wandung (20) aufweist, **dadurch gekennzeichnet, dass** zur Veränderung eines Staufachvolumens eine Höhe der Wandung (20) mindestens abschnittsweise durch eine Verstelleinrichtung umfassend mindestens eine Wickelwelle (61, 61 a, 61 b, 61 c, 61 d) veränderbar ist, und die Verstelleinrichtung eine Auszugsbegrenzungseinrichtung (9, 408, 509) umfasst, durch welche eine maximale Auszugsbewegung der mindestens einen Wickelwelle (61, 61 a, 61 b, 61 c, 61 d) begrenzt ist.

2. Vorrichtung nach Anspruch 1, **dadurch gekennzeichnet, dass** die Auszugsbegrenzungseinrichtung mindestens zwei über ein längliches Element (9), wie ein Seil, ein Band oder dergleichen, insbesondere ein Flachband, miteinander verbundene Zahnräder (381, 382) umfasst, wobei die maximale Auszugsbewegung durch die Länge des länglichen Elements (9) bestimmt ist.

3. Vorrichtung nach Anspruch 1, **dadurch gekennzeichnet, dass** die Auszugsbegrenzung (408) ein Getriebe mit mindestens zwei, insbesondere drei Zahnrädern (481, 482, 483) umfasst, wobei ein Drehwinkel zumindest eines Zahnrads (483) durch einen Anschlag (485) begrenzt ist.

4. Vorrichtung nach Anspruch 1, dadurch gekenntzeichnet, dass die Auszugsbegrenzung (509) ein Malteserkreuzgetriebe (591, 592) mit einem Zapfen (594) umfasst.

## Claims

1. A device for storing objects in a loading space (11) of a motor vehicle (1, 101) comprising a storage container (2, 702, 802) attachable in the loading space (11) of the motor vehicle, the storage container (2, 702, 802) having a supporting surface (21, 821) and a wall (20), said wall being elastically and/or inelastically deformable at least partially,
**characterized in that**
for varying a volume of the storage space, a height of the wall (20) is variable at least in certain sections by means of an adjustment device comprising at least one winding shaft (61, 61 a, 61 b, 61c, 61d), and the adjustment device comprises an extension-limiting device (9, 408, 509) for limiting a maximum extension movement of the at least one winding shaft (61, 61 a, 61 b, 61 c, 61 d).

2. The device according to claim 1, **characterized in that** the extension-limiting device comprises at least two gearwheels (381, 382) connected to one another by an elongate member (9), like a cord, a belt or the like, in particular a flat belt, such that the maximum extension movement is determined by the length of the elongate member (9).

3. The device according to claim 1, **characterized in that** the extension-limiting device (408) comprises a transmission having at least two, in particular three, gearwheels (481, 482, 483), a rotational angle of at least one gearwheel (483) being limited by a stop (485).

4. The device according to claim 1, **characterized in that** the extension-limiting device (509) comprises a Geneva drive (Maltese cross) mechanism (591, 592) having a spigot (594).

## Revendications

1. Dispositif de rangement d'objets dans un espace de chargement (11) d'un véhicule automobile (1, 101) comprenant un contenant de rangement (2, 702, 802) qui peut être monté dans l'espace de chargement (11) du véhicule automobile, le contenant de rangement (2, 702, 802) présentant une surface de support (21, 821) et une paroi (20) déformable de manière au moins partiellement élastique et/ou non élastique, **caractérisé en ce que** pour faire varier un volume du compartiment de rangement, une hauteur de la paroi (20) peut être modifiée au moins en partie par un dispositif de réglage comprenant au moins un arbre d'enroulement (61, 61 a, 61 b, 61 c, 61 d), et le dispositif de réglage comprend un dispositif de limitation d'extraction (9, 408, 509) permettant de limiter un mouvement d'extraction maximum de l'au moins un arbre d'enroulement (61, 61 a, 61 b, 61 c, 61 d).

2. Dispositif selon la revendication 1, **caractérisé en ce que** le dispositif de limitation d'extraction comprend au moins deux roues dentées (381, 382) connectées l'une à l'autre par le biais d'un élément longiligne (9), tel qu'un câble, une bande ou similaire, en particulier une bande plate, le mouvement d'extraction maximum étant déterminé par la longueur de l'élément longiligne (9).

3. Dispositif selon la revendication 1, **caractérisé en ce que** la limitation d'extraction (408) comprend un mécanisme avec au moins deux, en particulier trois, roues dentées (481, 482, 483), un angle de rotation d'au moins une roue dentée (483) étant limité par une butée (485).

4. Dispositif selon la revendication 1, **caractérisé en ce que** la limitation d'extraction (509) comprend un mécanisme à croix de Malte (591, 592) avec un tourillon (594).
